# EUROPEAN PATENT APPLICATION

(11) **EP 2 905 737 A1**
(43) Date of publication of application: **12.08.2015**
(21) Application number: 14154209.2
(22) Date of filing: 06.02.2014
(51) Int. Cl.: G06Q 30/02

(54) **Condition based reward offering**

(71) Applicant: HINTZE, Felix, 60316 Frankfurt (DE)
(72) Inventor: HINTZE, Felix, 60316 Frankfurt (DE)
(74) Representative: Metten, Karl-Heinz

(57) **Abstract**

This disclosure relates to a method for offering a reward to a customer. More specifically, this disclosure relates to a method allowing merchants to couple an offer of a reward to a certain behavior of the customer, in particular related to an automated publishing of an acceptance of the reward by the customer in a social network, and to revoke the offer under predetermined conditions.

## Description

### Field

This disclosure relates to a method for offering a reward to a customer. More specifically, this disclosure relates to a method allowing merchants to couple an offer of a reward to a certain behavior of the customer, in particular related to an automated publishing of an acceptance of the reward by the customer in a social network, and to revoke the offer under predetermined conditions.

### Background

Coupons have conventionally been distributed to customers by hand, e. g. via mail or newspapers. Modem ways of distributing coupons are provided by web pages or emails, which enable user to print their own coupons.

One of the problems by providing coupons is to control the number of times that a given coupon may be printed by a user. Without employing such a control mechanisms, the desired marketing effect may be reduced significantly due to windfall gains.

Another problem by providing coupons is to analyze the indirect impact of the coupons itself. There is no possibility to analyze whether the user informs his friends about his decision to use the coupon or to analyze the customer satisfaction. In particular, there is no possibility to analyze whether there may be a positive influence by the customer to his friends by or after using the coupon. As well, there is no possibility to customize coupons for a user dependent on the user's behavior and its influence on its friends.

Moreover, it might be a disadvantage of coupons that a coupon is a certificate that entitles any holder of the coupon to accept an offer of a reward as described or referenced by the coupon. There is in general no possibility to reject a coupon as long as the coupon is valid.

Therefore, it is one objective of the present disclosure to enable merchants to provide individual rewards to customers. Another objective of the present disclosure is to allow the merchants to couple the offer of a reward to a certain behavior of the customer, in particular related to a contribution of the user to the marketing of the product or service related to said offer of a reward, and to revoke the offer of a reward under predetermined conditions.

### Summary

One embodiment of the present disclosure is a method, in particular a computer implemented method, comprising the following steps, in particular in the following sequence:
A method, in particular a computer implemented method, comprising the following steps, in particular in the following sequence:
   a) at a first device, providing a machine-readable data tag comprising tag data, in particular related to an offer of a reward;
   b) at a mobile device, detecting the machine-readable data tag;
   c) communication of the mobile device with a first server, comprising
      i) at the mobile device, decoding the machine-readable data tag at least partially, in particular fully, to identify tag data encoded within the machine-readable data tag and sending the encoded and/or decoded tag data and first identification data of the mobile device to the first server; and at the first server, based on the decoded tag data creating a uniform resource locator (URL) and sending the URL to the mobile device; or
      ii) at the mobile device, sending the fully encoded machine-readable data tag and/or the detected machine-readable data tag and first identification data of the mobile device to the first server; and at the first server, decoding the machine-readable data tag to identify tag data encoded within the machine-readable data, and based on the decoded tag data creating an URL and sending the URL to the mobile device; or
      iii) at the mobile device, decoding machine-readable data tag at least partially to identify tag data encoded within the machine-readable data tag and, based on the at least partially decoded tag data creating an URL and sending the encoded and/or decoded tag data and first identification data of the mobile device and optionally the URL to the first server;
   d) at the mobile device, sending the URL and in particular the first and/or a second identification data to a second server;
   e) at the second server, sending first representation data related to the URL to the mobile device and causing the mobile device to display, in particular to a user, at least one representation related to said first representation data;
   f) at the mobile device, detecting an input, in particular from the user, representative for an acceptance or denial answer in response to the displayed representation of said first representation data;
   g) at the mobile device, sending the acceptance or denial answer and the first and/or second identification data to the first or/and the second server, in particular in parallel or subsequently, and
   h) at the first server, in case of receiving the acceptance answer from the mobile device and/or the second server sending second data relating to a confirmation, in particular a reward confirmation, associated with the machine-readable data tag and the first and/or a second identification data to the first device, to at least one second device and/or to the mobile device.

Machine-readable data tag according to the present disclosure is preferably a QR code, a radio-frequency identification (RFID) -tag and/or a near field communication (NFC) -tag. In the following, to ease the understanding of the present disclosure, it is only referred to a QR code without limiting the scope of the present disclosure. It is thereby obvious for those skilled in the art, that the term QR code may of course be replaced by RFID-tag or NFC-tag, if appropriate.

According to one embodiment of the method of the present disclosure, a first device may provide a machine-readable data. At a mobile device, the machine-readable data tag may be detected, in particular by a camera integrated with the mobile device.

The mobile device itself may communicate with a first server, wherein at the mobile device the machine-readable data tag may be at least partially, in particular fully, decoded to identify tag data encoded within the machine-readable data. After decoding the machine-readable data, the decoded tag data and first identification data of the mobile device may be sent to the first server. With the help of the first identification data, the tag data provided to the first server may be connected to a certain user respectively a certain mobile device. After receiving the decoded tag data, the first server may creating a uniform resource locator (URL) based on said decoded QR code data and may send the URL to the mobile device. In one alternative, the mobile device may send the fully encoded machine-readable data tag or the detected machine-readable data tag and first identification data of the mobile device to the first server. According to this embodiment, there is no encoding of the machine-readable data tag needed at the mobile device itself. After receiving the encoded machine-readable data tag or the machine-readable data tag itself, the first server may decode the machine-readable data tag to identify tag data encoded within the machine-readable data, and based on the decoded tag data may create an URL which then may be sent to the mobile device. In a further alternative embodiment of the present disclosure, the mobile device may decode the machine-readable data tag at least partially to identify tag data encoded within the machine-readable data tag and, may create an URL based on the at least partially decoded tag data. Afterwards, the encoded and/or decoded tag data and first identification data of the mobile device may be sent to the first server.

According to all three alternative embodiments, the machine-readable data may be decoded at the first server and/or the mobile device and based on that decoded tag data at least the encoded URL is available at the mobile device for further processing. At the first server, in addition to the decoded tag data, first identification data is available in connection with said URL and, in case, further parameters encoded within the machine-readable data. Thereby, the first server may be informed about a unique mobile device and/or a certain user that may have detected the machine-readable data.

In the next step according to one embodiment of the present disclosure, the mobile device may send the URL and in particular the first and/or a second identification data to a second server. Afterwards, the second server may send first representation data related to the URL to the mobile device and may cause the mobile device to display, to a user of the mobile device, at least one representation related to said first representation.

Thereby, it may be possible to show a user data related to the machine-readable data tag previously detected on the display device of the mobile device. In response to the displayed representation of said first representation data, an input of the user may be detected and an acceptance or denial answer in response to said input of the user may be generated.

Such an acceptance or denial answer may be related to a certain offer of a reward provided by a merchant according to one example of the present disclosure.

The acceptance or denial answer and the first and/or second identification data may then be sent to the first or/and the second server by the mobile device, in particular in parallel or subsequently, and afterwards, at the first server, in case of may have received the acceptance answer from the mobile device and/or the second server, second data relating to a reward confirmation associated with the machine-readable data tag and the first and/or a second identification data may be sent to the first device, a second device and/or the mobile device.

Thereby, according to one example of the present disclosure, the first server, the first device, a second device and/or the mobile device may be informed about the decision of the user with respect to the offer of a reward and the acceptance of said offer.

The first and/or second device may thereby be located at or in front of a store, a bank or the like. Thereby, a user may directly detect the machine-readable data tag with his mobile device and the acceptance or denial answer of the user may directly be presented to an employee of the merchant offering the reward for further processing.

Furthermore, it is obvious for those skilled in the art that the method according to the present disclosure is not restricted to one mobile device or one first device only. Instead, a multitude of mobile devices and/or first devices may be used, either in parallel or subsequently.

A reward in the sense of the present disclosure may not be limited to a conventional coupon or sales discount, but may also be a free of charge service like a free of charge breakfast in a hotel, or other free of charge additional services provided by the merchant, or a combination of a sales discount and other free of charge services.

The term merchant shall not be understood in narrow terms, but may also comprise companies like banks, service providers, hotels and the like that provide goods and/or services to customers.

As well, according to one embodiment of the present disclosure, the first representation data may comprise a transaction identification data that may be optionally provided to the first server by the mobile device. Such a transaction identification data may be of advantage to couple the sending of the first representation data and the respective reply of the user to a specific interaction between the second server and the mobile device.

According to one preferred embodiment of the present disclosure, the first server and the second server may be the same server, or alternatively, the first server and/or the second server may comprise of a multitude of servers that may communicate with each other, wherein in particular, at least one of said first and second servers may be a first and a second server at the same time.

The surprising finding of the present disclosure is that with the help of a machine-readable data tag and a first device, a mobile device as well as a first and a second server communicating with each other the direct and the indirect impact of an offer of a reward to a customer may be analyzed. Such an analysis may be focused on whether the user informs his friends about his decision to accept the offer or about the costumer satisfaction. Moreover, instead of using analog or digital coupons the merchant may be enabled to couple an offer of a reward to certain requirements that may have to be fulfilled by the user. As well, the merchant may be informed about the acceptance or refusal of those requirements by the user directly and based on said information may revoke or keep up the offer of a reward. As well, based on the information encoded within the machine-readable data tag and the first and/or identification data merchants may be enabled to provide individual rewards to customers.

According to a preferred embodiment of the method of the present disclosure, the method may further comprise the following steps, in particular after step d):
i) at the second server, based on the URL, the second server sending a first request to a third server identified by the URL;
j) in response to the first request, the second server receiving from the third server the first representation data configured to generate a representation of said first representation data, in particular a picture or video representative for said first representation data.

Within this preferred embodiment, the first representation data may be generated dynamically by the second server. In particular in case of the second server may host a social network such a generating of presentations is usually an inherent service of a social network. The term social network shall be understood not to be limited to social network services like Facebook, Twitter and Google Plus, but also to websites related to or based on user-generated content like Trip Adviser in general. Many social networks allow their users to prefer certain web pages, e.g. "like" or "+" certain web pages. A like, "+" button or recommend button is therefore a common feature in social networking services, where the user can express that he likes or supports certain content. When a user clicks a like, "+" or recommend button, the content may appear in many social networks in a news feed of said user's friends. Thereby, a preview of the web page to be liked is generated by the social network dynamically by sending an http request to an URL, and afterwards the preview is presented to the user, in general in combination with the like, "+" button or recommend button and a commenting option. Therefore, the first representation data, which may be according to one example of the present disclosure a preview of a web page, may be generated dynamically and automatically by the second server and may afterwards be displayed on the mobile device.

According to one preferred embodiment of the present disclosure, the third server, the first and/or the second server may be the same server.

According to a preferred embodiment of the method of the present disclosure, the method may further comprise the following steps, in particular before step a):
k) at the first and/or second server, generating at least one machine-readable data tag comprising the tag data;
l) sending at least one of the generated machine-readable data tag to the first device; and
m) at the first device, displaying the at least one machine-readable data.

According to this preferred embodiment of the present disclosure, a machine-readable data tag may be generated dynamically at the first and/or the second sever. It may thereby be preferred that one QR code may be generated, sent and displayed and subsequently a new machine-readable data may be generated, sent and displayed. In the alternative, it is preferred as well that more than one machine-readable data tag is generated at the first and/or second server, and at least one, or a multitude of said generated machine-readable data tags may be sent to the first device, wherein the first device may display said generated machine-readable data tags subsequently or, at least partially, in parallel. This may allow to generate unique QR codes and to link up a certain machine-readable data tag to a certain user.

According to a further preferred embodiment of the method of the present disclosure, the method may further comprise the following steps, in particular before step g)
n) at the first server, sending a second request to the second server requesting information about the acceptance or denial answer; and/or
o) at the mobile device, sending the acceptance or denial answer to the first server.

The first server may request information about the acceptance or denial answer of the user from the first server. This may have the advantage that an affirmation answer may not be created or forwarded by the mobile device of the user, but from the second server directly which may provide a higher reliability. As well, in addition to or in the alternative it may be possible that the acceptance or denial answer is provided to the first server by the mobile device directly.

According to a further preferred embodiment of the method of the present disclosure, the method may further comprise the following steps, in particular after step h)
p) at the second server, publishing the acceptance answer and/or publishing the URL related to the acceptance answer on a webpage, a computer-implemented social network, in particular hosted at least partially on the second server, in particular to the friends of the user within said social network, and/or sending an e-mail, a short message, a multimedia message, and/or a tweet comprising the acceptance answer and/or the URL related to the acceptance answer to at least one second device, in particular publishing or sending the acceptance answer and/or the URL related to the acceptance answer to a restricted group of contact persons of the user.

According to a further preferred embodiment of the method of the present disclosure, the method may further comprise the following steps, in particular after step h)
q) at the first server, sending at least a third request to the second server requesting information about the status of the acceptance answer, in particularly in predetermined intervals; and
   in case of a change of status of the acceptance answer sending a notification to the mobile device and/or the first device.

Many merchants have increasingly adopted social networks as another marketing and advertising platform, in addition to conventional media such as newspaper. Some merchants may create a Facebook account for their customers to "like," and some may start a Twitter account for their customers to "follow." The acceptance answer therefore may be a "liking" of a webpage or an account of a merchant in a social network. This may result in informing the friends of the user within the social network that the user likes the merchant or a product or service of the merchant presented on a webpage. Furthermore, it may be possible to proof the status of the "like" at a certain time or regularly after providing the reward to the user to analyze the reliability of a user.

According to a further preferred embodiment of the method according to the disclosure, the acceptance or denial answer comprises at least one comment of the user.

Such a comment may be helpful for a merchant to increase the impact of the marketing strategy. The user may directly inform his friends or other people about his opinion of the product, service and/or the offered reward.

According to a further preferred embodiment of the method according to the disclosure, the encoded tag data comprises at least a first parameter representative for the first device, at least a second parameter representative for a marketing campaign, at least a third parameter representative for a merchant, and/or a fourth parameter representative for a transaction identification and at least one URL.

According to a further preferred embodiment of the method according to the disclosure, a unique machine-readable data tag is provided and/or generated for each transaction procedure, wherein in particular the fourth parameter representative for a transaction identification is unique for each transaction.

According to a further preferred embodiment of the method according to the disclosure, the fourth parameter representative for a transaction identification comprises a time code, wherein at the first server, the first server is proofing the validity of said time code.

With the help of the first parameter it may be possible to identify a first device the user interacts with. With the help of the second parameter, a certain marketing campaign of a merchant may be identified. With the help of the third parameter it may be possible to identify a specific merchant. With the help of the fourth parameter each machine-readable data tags displayed may be unique and may be coupled to a certain time interval the machine-readable data tags is valid. As well, the fourth parameter may be used in addition to or in the alternative to control the amount of machine-readable data tag distributed.

According to a further preferred embodiment of the method according to the disclosure, the first device is configured and adapted to communicate with, in particular at least, the first server and in particular a second device, the mobile device is configured and adapted to communicate with, in particular at least, the first server and the second server, the first server is configured and adapted to communicate with, in particular at least, the second server, the first device, the second device and the mobile device; and/or the second server is configured and adapted to communicate with, in particular at least, the first server, the mobile device and the third server. In addition to, the mobile devices may obviously be adapted and configured to detect the machine-readable data tag displayed at the first device, preferably by a camera integrated with the mobile device.

Such a communication structure between the first device, the mobile device as well as the first and second server may be of advantage for processing the relevant information between the devices and servers. This communication structure may as well be of advantage to may fulfill data privacy protection requirements. Only the relevant data is provided to each of the entities.

According to a further preferred embodiment of the method according to the disclosure, the first device is a poster, picture, personal computer, tablet, smart phone and/or an electronic display device; and/or the mobile device is a personal computer, in particular a notebook or netbook, tablet and/or smart phone, wherein in particular the machine-readable data tag is detected by the mobile device by an integrated camera.

According to a further preferred embodiment of the method of the present disclosure, the method may further comprise the following steps, in particular before step a)
r) the second server is hosting a computer-implemented social network and the user of the mobile device and/or the first server is logging into said computer-implemented social network at the mobile device, wherein the first and/or second identification data is correlated with said login data.

According to a further preferred embodiment of the method of the present disclosure, the method may further comprise the following steps, in particular before step a)
s) at the first server, creating an offer of a reward depending on the encoded and/or decoded tag data and the first identification data, sending the offer of a reward to the mobile device and/or causing the mobile device to display, to a user of the mobile device, at least one representation related to the offer of a reward, in particular parallel to displaying the first representation data

This may allow displaying the offer of a reward to a user on the mobile device, wherein, it may further be possible to provide individual rewards for individual users.

According to a further preferred embodiment of the method of the present disclosure, the method may further comprise the following steps, in particular after step j)
t) at the first server, retrieving profile detail, including a social graph, of the user of the social network and;
u) generating by the first server influence scores for the user based on the received information; and in particular
v) setting the reward offered to the user depending on said influence score.

It may be possible to set the reward offered to the user depending on an influence score. Such an influence score may for example be based on, but not limited to, a social graph comprising the amount of friends of a user in a social network. Moreover, it may be possible to analyze how many of said friends of a user are using the offered reward as well in reaction to the publication of the usage of said reward by the user. Based on said analysis the reward for the user for example may be adjusted.

According to a further preferred embodiment of the method of the present disclosure, the method may further comprise the following steps, in particular after step c)
w) at the first and/or second server, generating a new machine-readable data tag comprising the tag data ;
x) sending the generated new machine-readable data tag to the first device; and
y) at the first device, displaying the new machine-readable data tag, wherein in particular steps r) to t) are not performed, if a predetermined number of machine-readable data tags is exceeded.

This may allow to control the amount of machine-readable data tags provided to the first device and, as well, to connect each machine-readable data tag to a certain user.

According to a further preferred embodiment of the method of the present disclosure, the method may further comprise the following steps, in particular in parallel to or after step e):
z) at the second server, sending third identification data related to the first representation data to the mobile device;
z1) at the second device, sending said third identification data to the first server.

With the help of the third identification data, which may be connected to the acceptance or denial answer of the user, the status of said answer of the user may be checked once or regularly.

According to a further preferred embodiment of the method according to the disclosure, wherein the QR code comprises an offer related to the reward, the offer comprises a proposal with an affirmative or non-affirmative answer option.

According to a further preferred embodiment of the method according to the disclosure, wherein the offer and/or the reward confirmation comprises a discount, a money transfer, a free of charge article and/or a voucher.

According to a further preferred embodiment of the method of the present disclosure, the method may further comprise the following steps, in particular before step a):
z2) at the first server, detecting an input of a further user, in particular a the first and/or second device, and creating a webpage based on that input and encoding the URL of said webpage into at least one of the machine-readable data tags.

This may allow a further user to generate a web page easily that is related to the offer of a reward without programming skills.

Furthermore, one embodiment of the present disclosure is a computer readable storing medium including computer executable instructions, wherein the instructions, when executed, cause said processor to implement a method according to the present disclosure.

Finally, one embodiment of the present disclosure is a system comprising of at least three computer readable storing mediums including computer executable instructions, wherein the at least three computer readable storing mediums are connected or connectable with each other via the internet, and wherein the instructions on said at least three computer readable storage mediums, when executed, cause said processor to implement a method according to the present disclosure.

As well, according to one preferred embodiment of the present disclosure, the confirmation received by the mobile device causes the mobile device to display a representation of said confirmation, in particular a picture or video representative for said confirmation. It may be possible that the displayed representation of the mobile device comprises information depending on a certain machine-readable data tag, a time, a time code related to the time the first and/or the second receiver receives the acceptance or denial answer and/or information regarding the user of the mobile device.

### Description of the Drawings

The foregoing aspects and many of the attendant advantages of this invention will become more readily appreciated as the same become better understood by reference to the following detailed description, when taken in conjunction with the accompanying drawings, wherein:
- Figure 1:: is a schematic block diagram 1 of an example of the communication structure of the first device, the second device, the mobile device, the first server, the second server and the third server according to a method of the present disclosure; and
- Figure 2:: is a schematic block diagram of an example of the method according to the present disclosure.

### Detailed Description of the Drawings

While illustrative examples are illustrated and described below, it will be appreciated that various changes can be made therein without departing from the spirit and scope of the disclosure. In that regard, the detailed description set forth below, in connection with the appended drawings is intended only as a description of various examples of the disclosed subject matter and is not intended to represent the only examples. Each example described in this disclosure is provided merely as an example or illustration and should not be construed as preferred or advantageous over other examples. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

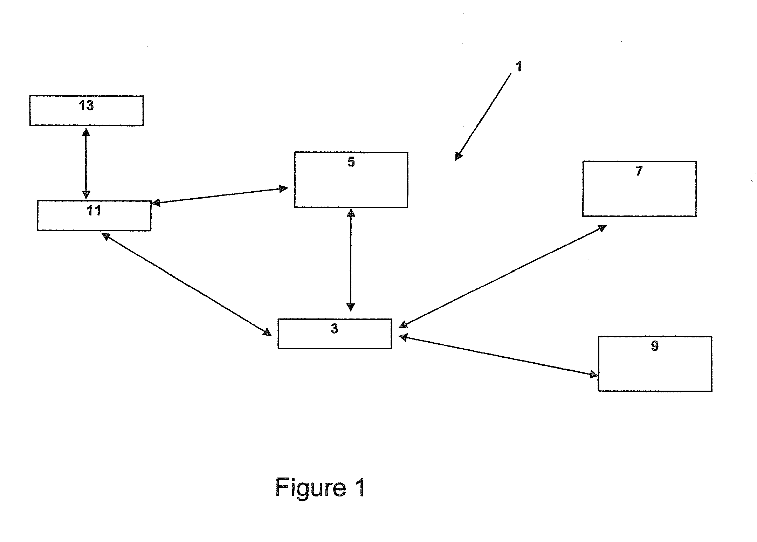

Figure 1 shows a diagram 1 illustrating an example of the communication structure of the first server 3, the mobile device 5, the first device 7, the second device 9, the second server 11 and the third server 13 according to one exemplarily embodiment of a method of the present disclosure.

The first device 7 is configured and adapted to communicate with, in particular at least, the first server 3. The mobile device 5 is configured and adapted to communicate with, in particular at least, the first server 4 and the second server 11. The first server 3 is configured and adapted to communicate with, in particular at least, the second server 11, the first device 7, the second device 9 and the mobile device 5. The second server 11 is configured and adapted to communicate with, in particular at least, the first server 3, the mobile device 5 and the third server 13.

In addition to, the mobile devices may obviously be adapted and configured to detect the machine-readable data tag, in particular a QR code, a RFID-tag and/or a NFC-tag displayed at the first device.

Therefore, a machine-readable data tagdisplayed on the first device 7 may be detected by the mobile device 5, preferably by a camera integrated with the mobile device 5. The at least partially encoded and/or decoded tag data or the machine-readable data tagitself may then be sent from the mobile device 5 to the first server 3, wherein the first server 3 may further process said tag data. A data exchange between the mobile device 5 and the first server 3 is possible for carry into execution the further method steps. The mobile device 5 may as well communicate with the second server 11, wherein in particular the second server 11 hosts a social network. The login information for said social network may not be provided to the first server 3, which may be helpful to fulfil data privacy protection requirements. Moreover, the mobile device 5 may not be connected to the first and the second device 7, 9, which further increases the security and reliability of the overall method. As the server 1 may be in connection with the second server 11, data or a user input provided by the mobile device 5 may also be checked directly at the second server 11 by the first server 3. If

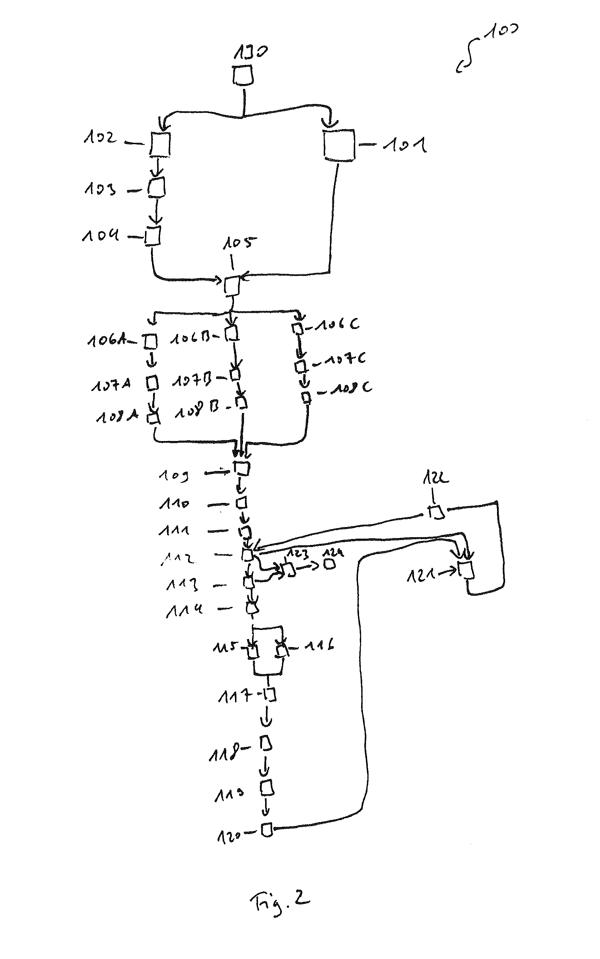

Figure 2 shows a diagram 100 illustrating an exemplarily embodiment of the method according to the present disclosure.

In an optional step 101, the user may at the mobile device log into a social network with his username and password, wherein the social network is hosted on the second server. According to one embodiment of the present disclosure, the user may stay logged in or in the alternative may have to log into the social network at certain points within the present method for establishing a connection between the mobile device and the second server. Said combination of a username and password of a social network may be or correlated with a first and/or second identification data.

Before, after or in parallel to step 101, at the first and/or the second server at least one machine-readable data tag comprising the tag data may be generated in an optional step 102. In a following step 103 after step 102 the at least one of the generated machine-readable data tags may be sent to the first device. Thereafter, in step 104 at the first device the at least one machine-readable data tag may be displayed..

With the help of steps 102 to 103, a machine-readable data tag may be generated dynamically at the first and/or the second sever. It may thereby be preferred that one machine-readable data tag may be generated, sent and displayed and subsequently a new machine-readable data tag may be generated, send and displayed. In the alternative, it is preferred as well that more than one machine-readable data tag is generated at the first and/or second server, and at least one, or a multitude of said generated machine-readable data tags may be sent to the first device, wherein the first device may display said generated machine-readable data tags subsequently or, at least partially, in parallel. This may allow to generate unique machine-readable data tags for each user and to link up a certain machine-readable data tag to a certain users.

In a step 105, the provided machine-readable data tag at the first device may be detected by the mobile device.

At the mobile device, the machine-readable data tag may be at least partially, in particular fully, decoded to identify tag data encoded within the machine-readable data tag in a step 106A. The encoded and/or decoded tag data and first identification data of the mobile device may then be sent to the first server in a step 107A. Thereafter, at the first server, based on the decoded tag data a uniform resource locator (URL) may be created and sent to the mobile device in a step 108A.

In the alternative, in a step 106B, at the mobile device the fully encoded tag data and/or the detected machine-readable data tag and first identification data of the mobile device may be sent to the first server. At the first server, in a step 107B, the machine-readable data tag may be decoded to identify tag data encoded within the machine-readable data tag, and in subsequent step 108B, based on the decoded tag data an URL may be created and sent to the mobile device.

Moreover, in a further alternative, the machine-readable data tag may at least partially be decoded at the mobile device to identify tag data encoded within the machine-readable data tag in a step 106C. Based on the at least partially decoded tag data an URL may be created at the mobile device in a step 107C and the encoded and/or decoded tag data and first identification data of the mobile device may be sent to the first server in a step 108C.

According to steps 106A to 109A, the mobile device itself may therefore communicate with a first server, wherein at the mobile device the machine-readable data tag may be at least partially, in particular fully, decoded to identify tag data encoded within the machine-readable data tag. After decoding the machine-readable data tag, the decoded tag data and first identification data of the mobile device may be sent to the first server. With the help of the first identification data, the tag data provided to the first server may be linked to a certain user respectively a certain mobile device. After receiving the decoded tag data , the first server may creating a uniform resource locator (URL) based on said decoded tag data and may send the URL to the mobile device.

According to steps 106B to 109B, the mobile device may send the fully encoded tag data or the detected machine-readable data tag and first identification data of the mobile device to the first server. According to this embodiment, there is no encoding of the machine-readable data tag needed at the mobile device itself. After receiving the encoded machine-readable data tag or the machine-readable data tag itself, the first server may decode the machine-readable data tag to identify tag data encoded within the machine-readable data tag, and based on the decoded tag data may create an URL which then may be sent to the mobile device.

According to steps 106C to 109C, the mobile device may decode the machine-readable data tag at least partially to identify tag data encoded within the machine-readable data tag and, may create an URL based on the at least partially decoded tag data. Afterwards, the encoded and/or decoded tag data and first identification data of the mobile device may be sent to the first server.

In an optional step 109 at the first and/or second server a new machine-readable data tag comprising the tag data may be generated and may be sent to the first device, wherein the first device may display the new machine-readable data tag. In particular, step 109 is may not be performed, if a predetermined number of machine-readable data tags is exceeded. With the help of step 109 it may be guaranteed that each machine-readable data tag is unique and used only once. This may allow to control the amount of machine-readable data tags provided to the first device and, as well, to connect each unique machine-readable data tag to a certain user.

In a step 110, at the mobile device, an URL, and in particular the first and/or a second identification data, may be sent to a second server.

At the second server, in a step 111, based on the URL, the second server may send a first request to a third server identified by the URL and in response to the first request, the second server receiving in a step 112 from the third server the first representation data configured to generate a representation of said first representation data, in particular a picture or video representative for said first representation data. Thereby, the first representation data may be generated dynamically by the second server. In particular if a social network may be hosted on the second server, many social networks allow their users to prefer certain web pages. When a user clicks a recommend button, a preview of the web page to be liked is generated by the social network dynamically by sending a http request to an URL, and afterwards present to the user, in general in combination with the recommend button and optionally a commenting option. Therefore, the first representation data, which may be according to one example of the present disclosure a preview of a web page, may be generated dynamically and automatically by the second server.

In a step 113, at the second server, the first representation data related to the URL may be sent to the mobile device and causing the mobile device to display, to a user of the mobile device, at least one representation related to said first representation data, preferably a generated preview picture of a webpage related to the URL. In reaction to said displaying, in a step 114 at the mobile device, an input of the user in response to the displayed representation of said first representation data may be detected and an acceptance or denial answer in response to said input of the user may be recorded.

In parallel or subsequent to either step 112 and/or 113, in an optional step 123, at the second server, third identification data related to the first representation data may be sent to the mobile device and in a step 124 said third identification data may be sent to the first server.

With the help of the third identification data, which may be connected to the acceptance or denial answer of the user, the status of said answer of the user may be checked once or regularly.

At the mobile device, in a step 115, the acceptance or denial answer and the first and/or second identification data may be sent to the first or/and the second server, in particular in parallel or subsequently. As well, in an optional step 116, at the mobile device, the acceptance or denial answer may be sent to the first server. As a further optional step 117, at the first server, a second request may be sent to the second server requesting information about the acceptance or denial answer.

The acceptance answer therefore may be a "liking" of a webpage or an account of a merchant in a social network. This may result in informing the friends of the user within the social network that the user likes the merchant or a product or service of the merchant. Furthermore, it may be possible to proof the status of the "like" at a certain time or regularly after providing the reward to the user to analyze the reliability of a user.

In a step 118, at the first server, in case of receiving the acceptance answer from the mobile device and/or the second server sending second data relating to a reward confirmation associated with the QR code and the first and/or a second identification data to the first device and/or the mobile device.

In an optional step 119, at the second server, the acceptance answer and/or the URL related to the acceptance answer may be published on a webpage, a computer-implemented social network, in particular hosted at least partially on the second server, in particular to the friends of the user within said social network, and/or sending an e-mail, a short message, a multimedia message, and/or a tweet comprising the acceptance answer and/or the URL related to the acceptance answer to at least one second device, in particular publishing or sending the acceptance answer and/or the URL related to the acceptance answer to a restricted group of contact persons of the user.

In an optional step 120, at the first server, at least a third request may be sent to the second server requesting information about the status of the acceptance answer, in particularly in predetermined intervals; and in case of a change of status of the acceptance answer sending a notification to the mobile device and/or the first device.

According to optional step 121, which may be performed parallel or subsequent to step 112 and/or step 120 at the first server, profile detail, including a social graph, of the user of the social network may be retrieved and by the first server influence scores for the user based on the received information may be generated. Optionally, in a step 122, the reward offered to the user may be set depending on said influence score. Such an influence score may for example be based on, but not limited to, a social graph comprising the amount of friends of a user in a social network. Moreover, it may be possible to analyze how many of said friends of a user are using the offered reward as well in reaction to the publication of the usage of said reward by the user. Based on said analysis the reward for the user for example may be higher or lower.

The encoded QR code data may comprise at least a first parameter representative for the first device, at least a second parameter representative for a marketing campaign, at least a third parameter representative for a merchant, and/or a fourth parameter representative for a transaction identification and at least one URL.

In an optional step 130, at the first server, an input of a further user, in particular a the first and/or second device, may be detected and a webpage based on that input may be created and the URL of said webpage may be encoded into at least one of machine-readable data tags. This may allow a further user to generate a web page easily that is related to the offer without programming skills.

The features of the present invention disclosed in the description above, in the claims and in the drawings can be used for implementing the invention in its different embodiments both individually and in every possible combination thereof.

The embodiments of the invention in which an exclusive property or privilege is claimed are defined as follows:

## Claims

1. A method, in particular a computer implemented method, comprising the following steps, in particular in the following sequence:
a) at a first device, providing a machine-readable data tag comprising tag data;
b) at a mobile device, detecting the machine-readable data tag;
c) communication of the mobile device with a first server, comprising
i) at the mobile device, decoding the machine-readable data tag at least partially, in particular fully, to identify tag data encoded within the machine-readable data tag and sending the encoded and/or decoded tag data and first identification data of the mobile device to the first server; and at the first server, based on the decoded tag data creating a uniform resource locator (URL) and sending the URL to the mobile device; or
ii) at the mobile device, sending the fully encoded machine-readable data tag and/or the detected machine-readable data tag and first identification data of the mobile device to the first server; and at the first server, decoding the machine-readable data tag to identify tag data encoded within the machine-readable data, and based on the decoded tag data creating an URL and sending the URL to the mobile device; or
iii) at the mobile device, decoding machine-readable data tag at least partially to identify tag data encoded within the machine-readable data tag and, based on the at least partially decoded tag data creating an URL and sending the encoded and/or decoded tag data and first identification data of the mobile device and optionally the URL to the first server;
d) at the mobile device, sending the URL and in particular the first and/or a second identification data to a second server;
e) at the second server, sending first representation data related to the URL to the mobile device and causing the mobile device to display at least one representation related to said first representation data;
f) at the mobile device, detecting an input representative for an acceptance or denial answer in response to the displayed representation of said first representation data ;
g) at the mobile device, sending the acceptance or denial answer and the first and/or second identification data to the first or/and the second server, in particular in parallel or subsequently, and
h) at the first server, in case of receiving the acceptance answer from the mobile device and/or the second server sending second data relating to a confirmation associated with the machine-readable data tag and the first and/or a second identification data to the first device, to at least one second device and/or to the mobile device.

2. The method according to claim 1 further comprising the following steps, in particular after step d):
i) at the second server, based on the URL, the second server sending a first request to a third server identified by the URL;
j) in response to the first request, the second server receiving from the third server the first representation data configured to generate a representation of said first representation data, in particular a picture or video representative for said first representation data.

3. The method according to claim 1 or 2, further comprising the following steps, in particular before step a):
k) at the first and/or second server, generating at least one machine-readable data tag comprising the tag data ;
l) sending the at least one generated machine-readable data tag to the first device; and
m) at the first device, displaying the at least one machine-readable data.

4. The method according to any one of the preceding claims, further comprising the following steps, in particular after step g)
n) at the first server, sending a second request to the second server requesting information about the acceptance or denial answer; and/or
o) at the mobile device, sending the acceptance or denial answer to the first server.

5. The method according to any one of the preceding claims further comprising the following step, in particular after step h)
p) at the second server, publishing the acceptance answer and/or publishing the URL related to the acceptance answer on a webpage, a computer-implemented social network, in particular hosted at least partially on the second server, in particular to the friends of the user within said social network, and/or sending an e-mail, a short message, a multimedia message, and/or a tweet comprising the acceptance answer and/or the URL related to the acceptance answer to at least one third device, in particular publishing or sending the acceptance answer and/or the URL related to the acceptance answer to a restricted group of contact persons of the user.

6. The method according to any one of the preceding claims further comprising the following step, in particular after step h)
q) at the first server, sending at least a third request to the second server requesting information about the status of the acceptance answer, in particularly in predetermined intervals; and in particular
in case of a change of status of the acceptance answer sending a notification to the mobile device and/or the first device.

7. The method according to any one of the preceding claims, wherein
the encoded machine-readable data tag comprises at least a first parameter representative for the first device, at least a second parameter representative for a marketing campaign, at least a third parameter representative for a merchant, and/or a fourth parameter representative for a transaction identification and at least one URL, and wherein in particular a unique machine-readable data tag is provided and/or generated for each transaction procedure, wherein in particular the fourth parameter representative for a transaction identification is unique for each transaction, wherein in particular the fourth parameter is representative for a transaction identification comprises a time code, wherein at the first server, the first server is proofing the validity of said time code.

8. The method according to any one of the preceding claims, wherein
the first device is configured and adapted to communicate with, in particular at least, the first server and in particular a second device;
the mobile device is configured and adapted to communicate with, in particular at least, the first server and the second server;
the first server is configured and adapted to communicate with, in particular at least, the second server, the first device, the second device and the mobile device; and/or the second server is configured and adapted to communicate with, in particular at least, the first server, the mobile device and the third server.

9. The method according to any one of the preceding claims, wherein
the first device is a poster, picture, personal computer, tablet, smartphone and/or an electronic display device; and/or
the mobile device is a personal computer, in particular a notebook or netbook, tablet and/or smartphone, wherein in particular the machine-readable data tag is detected by the mobile device by an integrated camera and/or a near field communication device.

10. The method according to any one of the preceding claims, further comprising the following step, in particular before step a)
r) the second server is hosting a computer-implemented social network and the user of the mobile device and/or the first server is logging into said computer-implemented social network at the mobile device, wherein the first and/or second identification data is correlated with said login data.

11. The method according to any one of the preceding claims, further comprising the following steps, in particular parallel to step c), parallel to step e) and/or after step h)
s) at the first server, creating an offer of a reward depending on the encoded and/or decoded machine-readable data tag and the first identification data, sending the offer of a reward to the mobile device and/or causing the mobile device to display, to a user of the mobile device, at least one representation related to the offer of a reward, in particular parallel to displaying the first representation data

12. The method according to any one of the preceding claims, further comprising the following steps, in particular parallel to step c), parallel to step e) and/or after step h)
t) at the first server, retrieving profile detail, including a social graph, of the user of the social network and;
u) generating by the first server influence scores for the user based on the received information; and in particular
v) setting the reward offered to the user depending on said influence score.

13. The method according to any one of the preceding claims, further comprising the following steps, in particular after step c):
w) at the first and/or second server, generating a new machine-readable data tag comprising the tag data;
x) sending the generated new machine-readable data tag to the first device; and
y) at the first device, displaying the new machine-readable data, wherein
in particular steps r) to t) are not performed, if a predetermined number of machine-readable data tags is exceeded.

14. The method according to any one of the preceding claims, further comprising the following steps, in particular in parallel to or after step e):
z) at the second server, sending third identification data related to the first representation data to the mobile device;
z1) at the mobile device, sending said third identification data to the first server.

15. The method according to any one of the preceding claims, **characterized in that**
the machine-readable data tag is a QR code, a radio-frequency identification (RFID) - tag and/or a near field communication (NFC) -tag.
